# EUROPÄISCHE PATENTSCHRIFT

(11) **EP 1 425 206 B1**
(45) Veröffentlichungstag und Bekanntmachung des Hinweises auf die Patenterteilung: **27.07.2005**
(21) Anmeldenummer: 02797972.3
(22) Anmeldetag: 10.09.2002
(51) Int. Cl.: B62D 1/10

(54) **ANORDNUNG BESTEHEND AUS EINEM LENKRAD UND EINEM TORSIONSMODUL**
ASSEMBLY CONSISTING OF A STEERING WHEEL AND A TORSION MODULE
ENSEMBLE COMPOSE D'UN VOLANT ET D'UN MODULE DE TORSION

(30) Priorität: 10.09.2001 DE 10144549
(43) Veröffentlichungstag der Anmeldung: 09.06.2004
(73) Patentinhaber: Leopold Kostal GmbH & Co. KG, 58507 Lüdenscheid (DE)
(72) Erfinder: DONNER, Harald, 58540 Meinerzhagen (DE)
(86) Internationale Anmeldenummer: PCT/EP2002/010105
(87) Internationale Veröffentlichungsnummer: WO 2003/022658

(56) Entgegenhaltungen:
- EP-A- 0 879 752
- US-A- 5 855 451
- US-A- 5 884 936

## Beschreibung

Die Erfindung betrifft eine Anordnung bestehend aus einem Lenkrad und einem Torsionsmodul einer Drehmomenterfassungseinrichtung eines Lenkkraftunterstützungssystems oder eines Lenksystems.

Lenkräder von Kraftfahrzeugen umfassen vielfach elektrische/elektronische Baugruppen, wie beispielsweise Schalter, Anzeigeinstrumente und/oder eine Airbag-Einrichtung. Im allgemeinen werden diese Baugruppen individuell und unabhängig voneinander im bzw. am Lenkrad montiert, beispielsweise an den Lenkradspeichen. Zur Vereinfachung einer Montage der elektrischen/elektronischen Baugruppen, insbesondere der Bedienelemente ist bereits vorgeschlagen worden, diese gemeinsam auf einem Tragekörper anzuordnen, so daß diese gemeinsam am Lenkrad befestigt werden können: Ein solches ,z.B. aus DE 19 647 705 A oder US 5 884 936 A, vorbekanntes Lenkradmodul wird in aller Regel von der Lenkradrückseite her am Lenkrad befestigt.

In zunehmendem Maße werden elektrische Lenkkraftunterstützungssysteme in Kraftfahrzeugen eingesetzt. Für diese Systeme wird als Stellgröße das auf das Lenkrad ausgeübte Drehmoment benötigt, so daß anhand des festgestellten Drehmomentes die gewünschte Lenkkraftunterstützung erfolgen kann. Zur Drehmomenterfassung wird ein Torsionsmodul eingesetzt, welches einen Drehwinkelversatz zwischen dem Lenkrad und der Lenkspindel bei Anlegen eines Drehmomentes gestattet Ein derartiger Vorschlag ist beispielsweise bekannt aus WO 99/40402 A1. Das Torsionsmodul der aus diesem Dokument bekannten Anordnung bildet somit die Schnittstelle zwischen dem Lenkrad und der Lenkspindel. Das Torsionsmodul dieser vorbekannten Anordnung ist als Speichenrad ausgebildet und umfaßt eine innere Nabe, die mit einem äußeren Kranz über Biegespeichen verbunden ist. Die Nabe weist eine zentrale Bohrung mit einer Innenverzahnung auf zur Montage an dem oberen freien Ende der Lenkspindel einer Lenksäule. An dem äußeren Kranz dieses Speichenrades sind radial nach außen abragende Fortsätze angeformt, die als Befestigungslaschen zum Befestigen des Lenkrades dienen und Bohrungen zur Aufnahme von axial einsetzbaren Befestigungsbolzen aufweisen. An diesen Befestigungslaschen, wird der Boden des Lenkrades durch axial eingreifende Befestigungsbolzen befestigt.

Eine Montage dieser Anordnung an der Lenkspindel einer Lenksäule erfolgt dadurch, daß die Einheit gebildet aus Torsionsmodul und Lenkrad mit der Nabe des Torsionsmoduls an der Lenkspindel befestigt wird. Anschließend ist es möglich, in das Lenkrad ein Lenkradmodul mit elektrischen/elektronischen Komponenten oder Baugruppen einzusetzen. Erst nach dieser Montage kann das Lenkrad auf die Funktionstüchtigkeit seiner Komponenten hin überprüft werden. Da in aller Regel eine Montage des Lenkrades an der Lenkspindel erst beim Kraftfahzeughersteller erfolgt, muß von diesem auch die notwendige Funktionstüchtigkeitsüberprüfung durchgeführt werden.

In zunehmendem Maße ist man jedoch bestrebt, einem Kraftfahrzeughersteller bezüglich einer Funktionstüchtigkeit seiner Komponenten fertiggeprüfte Module zur Montage am bereitzustellen. Dies ist bei der vorbekannten Anordnung jedoch nicht möglich.

Aus DE 195 44 580 C1 ist eine Vorrichtung zur Befestigung eines Lenkrades an einer Lenksäule bekannt, durch die es ermöglicht ist, das Lenkrad einschließlich aller Baugruppen komplett vorzumontieren und als fertig geprüftes Modul einer Endmontage bereitzustellen. Zu diesem Zweck ist an Lenkrad und Lenkwelle eine Rastverbindung vorgesehen, die das Lenkrad nach dem Aufstecken auf die Lenkwelle gegen ein Abziehen sichert. Beim Gegenstand dieses Dokumentes ist es jedoch nicht möglich, an der Schnittstelle zwischen Lenkrad und Lenkspindel ein Torsionsmodul, wie beispielsweise in der WO 99/40402 A1 beschrieben, als Teil einer Drehmomentserfassungseinrichtung anzuordnen.

Ausgehend von dem zuerst diskutierten Stand der Technik liegt der Erfindung daher die Aufgabe zugrunde, eine eingangs genannte, gattungsgemäße Anordnung dergestalt auszubilden, daß grundsätzlich eine Montage eines bezüglich der Funktionstüchtigkeit seiner Komponenten geprüften Lenkrades an der Lenkspindel einer Lenksäule montiert werden kann.

Diese Aufgabe wird erfindungsgemäß dadurch gelöst, daß das Torsionsmodul unabhängig von dem Lenkrad an der Lenkspindel einer Lenksäule mit seinem einen Widerlager befestigbar ist und das Lenkrad im Bereich seines Bodens mit dem anderen Widerlager des Torsionsmoduls in den Drehrichtungen des Lenkrades formschlüssig in Eingriff steht und in axialer Richtung zum einen durch den Boden des Lenkrades und zum anderen durch radial oder tangential zur Lenkachse betätigbare und das Torsionsmodul gegenüber einem Abziehen sichernde, hintergreifende Befestigungsmittel verbunden ist.

Bei der erfindungsgemäßen Anordnung ist das Torsionsmodul unabhängig von dem Lenkrad an der Lenkspindel einer Lenksäule befestigbar. Bei Einsatz eines Speichenrades ist die Nabe des Speichenrades beispielsweise durch Einsatz einer axialen Befestigungsschraube an der Lenkspindel befestigt. Das Lenkrad selbst ist an dem anderen Widerlager des Torsionsmoduls - bei Einsatz eines Speichenrades am äußeren Kranz - befestigbar, indem dieses in den beiden Drehrichtungen des Lenkrades formschlüssig mit dem Torsionsmodul in Eingriff gestellt wird. In den beiden axialen Richtungen ist das Lenkrad zum einen durch seinen Boden oder durch eine entsprechende Platte und zum anderen durch radial betätigbare und das Torsionsmodul gegenüber einem Abziehen sichernde und das Torsionsmodul hintergreifende Befestigungsmittel an dem Torsionsmodul gehalten. Eine tatsächliche Befestigung des Lenkrades erfolgt somit ausschließlich über die das Torsionsmodul hintergreifenden Befestigungsmittel, die radial oder tangential bedienbar sind. Somit brauchen die beweglichen Befestigungsmittel das Lenkrad lediglich gegenüber einer von der Lenkspindel abziehenden Bewegung zu sichern.

Der sich aus einer solchen Anordnung ergebende Vorteil liegt insbesondere darin begründet, daß das Lenkrad an dem Torsionsmodul befestigt werden kann, ohne daß zu diesem Zweck ein die elektrischen/elektronischen Komponenten des Lenkrades tragendes Lenkradmodul aus dem Lenkrad entfernt werden müßte, um einen Zugang zu dem Bereich des Bodens des Lenkrades zu erlangen. Da lediglich das Torsionsmodul durch die Befestigungsmittel hintergriffen werden muß, können diese ohne weiteres durch radial oder tangential zur Lenkachse angeordnete Stellantriebe betätigt werden. Zu diesem Zweck bedarf es lediglich einer radialen oder entsprechend tangential angeordneten Öffnung zum Einführen eines Werkzeuges zum Betätigen eines solchen Stellantriebes.

In einem bevorzugten Ausführungsbeispiel ist das Torsionsmodul ein Speichenrad mit einer Nabe und einem über Biegespeichen mit der Nabe verbundenen äußeren Kranz. Eine formschlüssige In-Eingriff-Stellung in den beiden Drehrichtungen des Lenkrades zwischen dem Lenkrad und dem Torsionsmodul kann beispielsweise durch Ausbilden einer Außenzahnung am äußeren Kranz des Tersionsmoduls und einer entsprechend komplementär ausgebildeten Innenzahnung in einer Aufnahme im Bereich des Bodens des Lenkrades zur Aufnahme des Torsionsmoduls realisiert sein. Die Zahnungen können durch einzelne Vorsprünge ausgebildet sein. Zweckmäßig ist das Vorsehen einer Unverwechselbarkeitsmarkierung in den beiden Zahnungen, so daß eine Montage des Lenkrades an dem Torsionsmodul nur in einer einzigen Stellung dieser beiden Elemente zueinander möglich ist. Eine solche Unverwechselbarkeitsmarkierung kann beispielsweise dadurch ausgebildet sein, daß der Abstand zwischen zwei eine Zahnung bildenden Vorsprüngen größer ist als der ansonsten vorgesehene Abstand zwischen zwei Vorsprüngen.

Die Befestigungsmittel zum Befestigen des Lenkrades an dem Torsionsmodul sind zweckmäßigerweise Teil des Lenkrades. Diese können beispielsweise als das Torsionsmodul hintergreifende Klammern konzipiert sein. Entsprechend einem Ausführungsbeispiel einer derartigen Klammerbefestigung ist vorgesehen, daß zwei einander zur Lenkachse diametral gegenüberliegend angeordnete Klammern schwenkbar am Lenkrad gelagert sind. Diese sind über einen doppelseitig wirkenden Spindelantrieb, der seinerseits eine radial oder tangential zur Lenkachse verlaufende Drehachse aufweist, in ihre das Torsionsmodul hintergreifende Stellung einschwenkbar. Dabei kann vorgesehen sein, daß der Hinterschnitt des Torsionsmoduls, hinter den die Klammern zum Befestigen des Lenkrades an dem Torsionsmodul eingreifen, durch die Rückseite des Torsionsmoduls oder auch durch einen entsprechenden Einschnitt, beispielsweise eine Nut in der Mantelfläche des Torsionsmoduls realisiert sein kann.

Entsprechend einer weiteren Ausgestaltung einer Verwendung von Klammern zum Befestigen des Lenkrades an dem Torsionsmodul sind diese Teil eines drehbar angeordneten Stellringes, der über einen exzentrisch zur Lenkachse angeordneten Schraubenantrieb um einen bestimmten Drehwinkelbetrag bewegt werden kann. Die Klammern entsprechend dieser Ausgestaltung sind in axialer Richtung vom Lenkrad zum Torsionsmodul hin abragend und dergestalt konzipiert, daß diese beim Aufsetzen des Lenkrades auf das Torsionsmodul zwischen den Abstand zweier Vorsprünge hindurchgeführt werden können. Nach einer Betätigung des Schraubenantriebes und einer entsprechenden Bewegung des Stellringes um einige Winkelgrade werden die Klammern hinter die Vorsprünge geführt, so daß auf diese Weise eine bajonettartige Verriegelung erfolgt.

Zweckmäßigerweise erfolgt eine Befestigung des Lenkrades an dem Torsionsmodul durch Hintergreifen des Torsionsmoduls unter gleichzeitiger Ausübung einer axialen Bewegungskomponente gemäß der das Lenkrad zum Torsionsmodul hingezogen wird. Das obere Widerlager bildet in diesem Fall der Boden des Lenkrades. Das Lenkrad ist dann spielfrei und zusätzlich verklemmt an dem Torsionsmodul befestigt.

Von Vorteil ist bei der beanspruchten Anordnung ferner, daß die maßgeblichen Belastungsrichtungen dieser Schnittstelle zwischen Lenkrad und Torsionsmodul nicht durch bewegliche Verbindungsmittel aufgefangen werden müssen, sondern durch das formschlüssige In-Eingriff Stellen des Lenkradbodens mit dem Torsionsmodul und durch das Anliegen des Lenkradbodens auf der Oberseite des Torsionsmoduls durch starre Elemente realisiert sind. Lediglich das Abziehen des Lenkrades vom Torsionsmodul ist durch stellbare Befestigungsmittel gesichert.

Nachfolgend ist die Erfindung anhand von Ausführungsbeispielen unter Bezugnahme auf die beigefügten Figuren beschrieben. Es zeigen:
- **Fig. 1**:: Eine schematisierten dreidimensionale Ansicht einer Anordnung bestehend aus einem Lenkrad und einem Torsionsmodul einer Drehmomenterfassungseinrichtung,
- **Fig. 2:**: Die Anordnung der Figur 1 in einer vergrößerten und bezüglich des Lenkrades zum Teil geschnittenen Ansicht in einer ersten Montagestellung,
- **Fig. 3**:: Die Anordnung der Figur 2 in einer zweiten Montagestellung des Lenkrades zum Torsionsmodul,
- **Fig. 4:**: Das an dem Torsionsmodul befestigte Lenkrad der Figuren 1-3,
- **Fig. 5**:: Eine weitere Anordnung bestehend aus einem Lenkrad und einem Torsionsmodul gemäß einer weiteren Ausgestaltung in einer zum Teil geschnittenen dreidimensionalen Darstellung in einer ersten Montagestellung,
- **Fig. 6**:: Die Anordnung der Figur 5 in einer weiteren Montagestellung und
- **Fig. 7**:: Die Anordnung der Figur 6 mit dem am Torsionsmodul befestigten Lenkrad.

Eine Anordnung 1 bestehend aus einem Lenkrad 2 und einem als Speichenrad 3 ausgebildeten Torsionsmodul, das Teil einer nicht näher dargestellten Drehmomenterfassungseinrichtung eines Lenkkraftunterstützungssystems ist. Das Speichenrad 3 umfaßt eine innere Nabe 4 mit einer axialen Bohrung, durch die eine Befestigungsschraube 5 zum Befestigen des Speichenrades 3 an dem oberen freien Ende einer Lenkspindel 6 greift. Radial zur Nabe 5 sind mehrere Biegespeichen 7 abragend angeordnet, die einen äußeren Kranz 8 tragen. Die Nabe 4 stellt das eine Widerlager des Torsionsmoduls und der äußere Kranz 8 das weitere Widerlager dar.

Das Lenkrad 2 ist komplett vormontiert und bezüglich der darin enthaltenen elektrischen/elektronischen Komponenten auf ihre Funktionstüchtigkeit hin geprüft. Insbesondere befindet sich in dem Lenkrad auch bereits die Airbag-Einrichtung. Das Lenkrad 2 umfaßt ferner im Bereich seines Bodens Befestigungsmittel 9, mit denen das Lenkrad 2 an dem äußeren Kranz 8 des Speichenrades 3 befestigt werden kann.

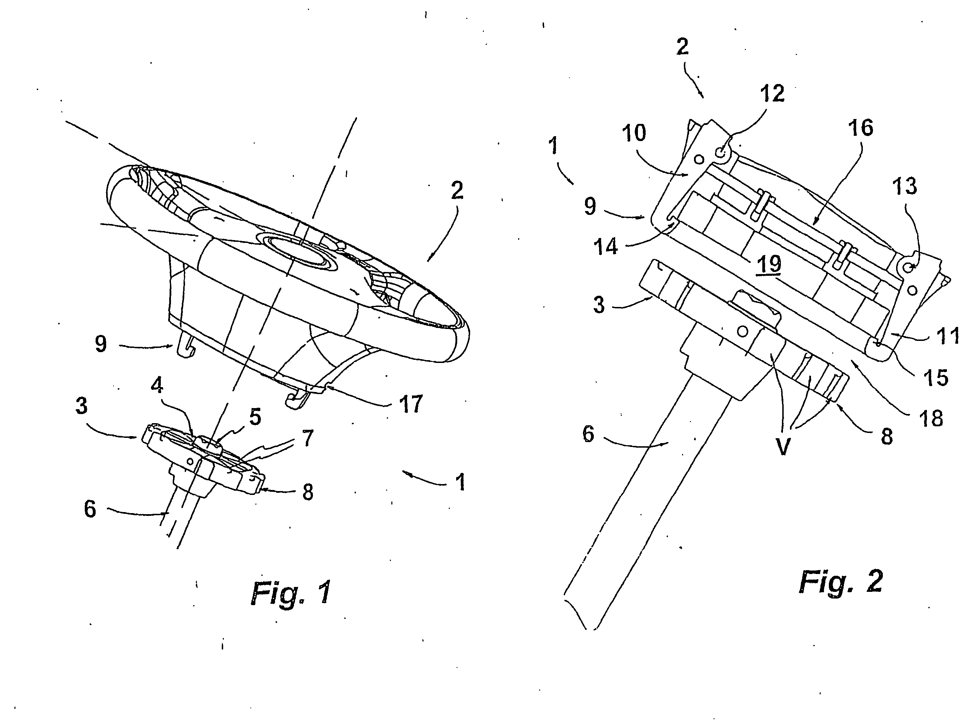

Diese Befestigungsmittel 9 umfassen, wie aus Figur 2 ersichtlich, zwei schwenkbar im Lenkrad 2 gelagerte Klammern 10, 11. Die Schwenkachsen sind in dieser Figur mit den Bezugszeichen 12, 13 gekennzeichnet.

Das untere freie Ende der Klammern 10, 11 weist zum Hintergreifen des äußeren Kranzes 8 des Speichenrades 3 jeweils einen Verklammerungsvorsprung 14 bzw. 15 auf. Die beiden Klammern 10, 11 sind antreibbar durch einen doppelseitig wirkenden Spindelantrieb 16, dessen Drehachse sich radial zur Lenkachse erstreckt. In zumindest ein Kopfende - in der Figur durch die Klammern 10 bzw. 11 verdeckt - ist eine Werkzeugaufnahme integriert, so daß radial ein Werkzeug zum Betätigen des Spindelantriebes 16 angesetzt werden kann. Zu diesem Zweck ist in das Gehäuse des Lenkrades 2 eine Betätigungsöffnung 17 (vgl. Figur 1) eingebracht.

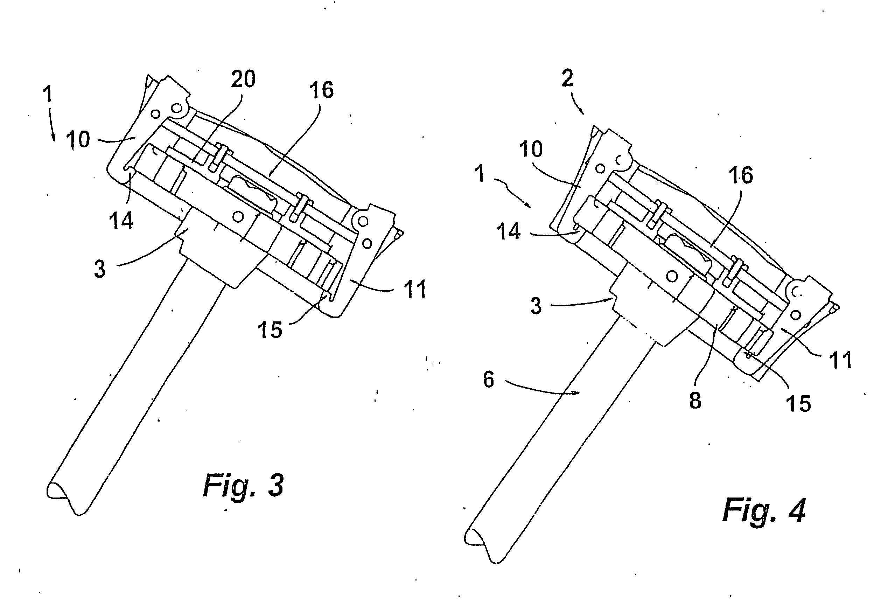

Der insgesamt mit dem Bezugszeichen 18 bezeichnete Boden des Lenkrades 2 umfaßt eine Aufnahme 19 zur Aufnahme des Speichenrades 3. Der äußere Kranz 8 des Speichenrades 3 weist nach außen radial abragende Vorsprünge V auf, durch die eine Außenzahnung gebildet ist. Entsprechend komplementär ausgebildet ist die zur Lenkachse konzentrische Oberfläche der Aufnahme 19 des Lenkrades 2, so daß nach Aufsetzen des Lenkrades 2 auf das Speichenrad 3 eine formschlüssige In-Eingriff-Stellung zwischen dem Lenkrad 2 und dem äußeren Kranz 8 des Speichenrades 3 realisiert ist. Die Aufnahme 19 ist in axialer Richtung oberseitig durch eine Platte 20 begrenzt, so daß auf diese Weise das Lenkrad 2 bezüglich der maßgeblich von dem Lenkrad 2 auf die Lenkspindel 6 wirkenden Kräfte formschlüssig mit dem Speichenrad 3 verbunden ist. Diese Anordnung ist in Figur 3 wiedergegeben. Die Länge der Klammern 10, 11 ist dimensioniert, damit die Verklammerungsvorsprünge 14, 15 mit ihrer jeweiligen Oberseite den äußeren Kranz 8 des Speichenrades 3 in der in Figur 3 gezeigten Montagestellung hintergreifen. Eine Betätigung des Spindelantriebs 16 resultiert in einer Verschwenkbewegung der beiden Klammern 10, 11, wobei die Verklammerungsvorsprünge 14, 15 hinter den äußeren Kranz 8 des Speichenrades 3 eingeschwenkt werden. Über den Spindelantrieb 16 kann zudem über die Klammern 10, 11 die gewünschte Klemmkraft auf das Speichenrad 3 ausgeübt werden. In dieser Stellung ist das Lenkrad 2 bestimmungsgemäß über das Speichenrad 3 mit der Lenkspindel 6 verbunden. Insbesondere war es für diese Befestigung des Lenkrades 2 an dem Speichenrad 3 nicht notwendig, daß in dem Lenkrad 2 enthaltene Lenkradmodul mit seinen elektrischen/elektronischen Komponenten, insbesondere mit seiner Airbag-Einrichtung vom Lenkrad 2 zu entfernen und anschließend wieder zu montieren, was eine nochmalige Funktionstüchtigkeitsüberprüfung zur Folge hätte.

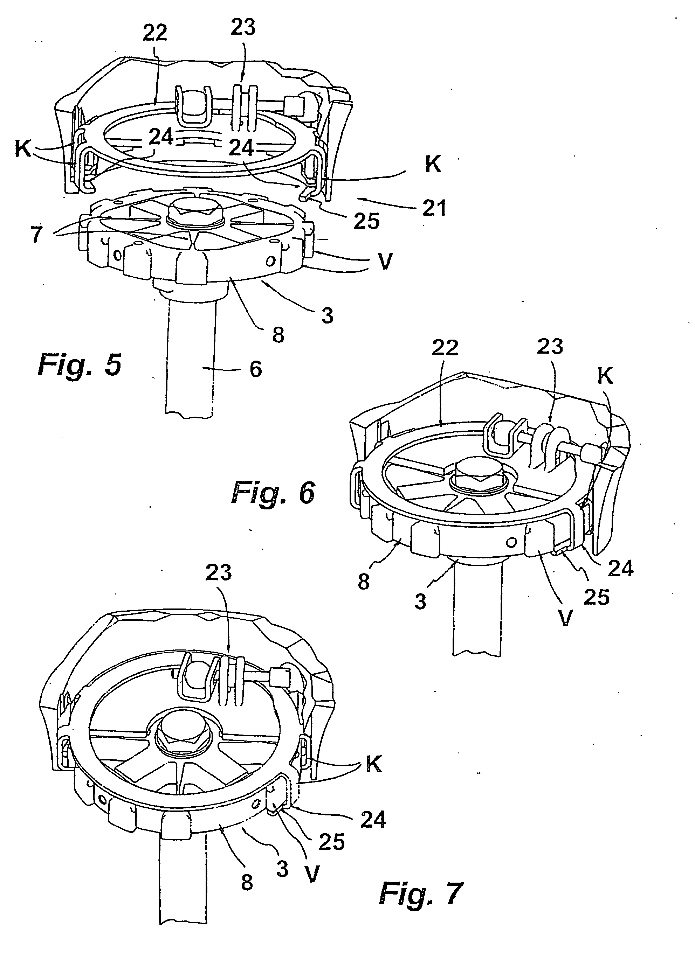

Figur 5 zeigt eine weitere Ausgestaltung einer Anordnung - wie zur Figur 1 beschrieben - die sich jedoch von der Anordnung der Figur 1 dadurch unterscheidet, daß andere Befestigungsmittel eingesetzt sind. Der Übersicht halber sind in dieser und den nachfolgenden Figuren die gleichen Bauteile, die auch bei der Anordnung der Figuren 1 bis 4 eingesetzt sind, mit gleichen Bezugszeichen gekennzeichnet.

Die Befestigungsmittel 21 des in Figur 5 gezeigten Lenkrades sind bajonettähnlich arbeitend konzipiert und umfassen einen Stellring 22, der über einen Schraubenantrieb 23 drehbar im Bereich des Bodens des Lenkrades angeordnet ist. Von dem Stellring nach außen, insbesondere in axialer Richtung zum Speichenrad 3 hin abragend sind mehrere Klammern K angeordnet, die unterseitig eine zur Lenkachse hin gerichtete Abwinklung 24 sowie eine Klemmschräge 25 aufweisen. Figur 5 zeigt das Lenkrad mit seinen Befestigungsmitteln 21 in einer ersten Montagestellung beim Heranführen des Lenkrades an das Speichenrad 3. Die Klammern K sind an solchen Stellen des Stellringes 22 nach unten abragend angeordnet, an denen ein Abstand zwischen jeweils zwei Vorsprüngen V des äußeren Kranzes 8 des Speichenrades 3 vorgesehen ist. Durch diese Vorsprünge V hindurch werden die Abwinklungen 24 der Klammern K geführt. Diese weitere Montagestellung ist in Figur 6 dargestellt Die Abwinklungen 24 und die Klemmschrägen 25 befinden sich bereits in einer Ebene hinter der Rückseite des äußeren Kranzes 8 des Speichenrades 3. Das Speichenrad 3 grenzt mit seiner Oberseite an die Platte 20 des Lenkrades. Zum Fixieren des Lenkrades an dem äußeren Kranz 8 des Speichenrades 3 wird nunmehr der Schraubenantrieb 23 betätigt, so daß der Stellring 22 um einen bestimmten Winkelbetrag gedreht wird, wobei die Abwinklungen 24 mit ihren Klemmschrägen 25 jeweils auf die Rückseite hinter einen Vorsprung V gebracht werden, wie dies in Figur 7 gezeigt ist. Die Klammern K sind außenseitig einen Vorsprung V umgreifend angeordnet. Die Klemmschräge 25 dient, um eine gewisse axiale Bewegungskomponente ausüben zu können, um das Lenkrad spielfrei an dem äußeren Kranz 8 des Speichenrades 3 befestigen zu können.

Das Aufsetzen des fertig geprüften Lenkrades mit seinen sämtlichen elektrischen/elektronischen Komponenten in axialer Richtung auf das Torsionsmodul ist zweckmäßigerweise verbunden mit einer gleichzeitigen In-Eingriff-Stellung von zwei Steckverbindern zum Anschließen der elektrischen/elektronischen Komponenten des Lenkrades an das Bordnetz. Das In-Eingriff-Stellen der beiden miteinander zusammenwirkenden Steckverbinder erfolgt dann automatisch beim Aufsetzen des Lenkrades auf das Torsionsmodul und bedarf somit keines zusätzlichen Montageschrittes.

### Bezugszeichenliste

- 1: Anordnung
- 2: Lenkrad
- 3: Speichenrad
- 4: Nabe
- 5: Befestigungsschraube
- 6: Lenkspindel
- 7: Biegespeiche
- 8: Äußerer Kranz
- 9: Befestigungsmittel
- 10: Klammer
- 11: Klammer
- 12: Schwenkachse
- 13: Schwenkachse
- 14: Verklammerungsvorsprung
- 15: Verklammerungsvorsprung
- 16: Spindelantrieb
- 17: Betätigungsöffnung
- 18: Boden
- 19: Aufnahme
- 20: Platte
- 21: Befestigungsmittel
- 22: Stellring
- 23: Schraubenantrieb
- 24: Abwinklung
- 25: Klemmschräge

- K: Klammer
- V: Vorsprung

## Patentansprüche

1. Anordnung bestehend aus einem Lenkrad (2) und einem Torsionsmodul (3) einer Drehmomenterfassungseinrichtung eines Lenkkraftunterstützungssystems oder eines Lenksystems, wobei das Torsionsmodul (3) unabhängig von dem Lenkrad (2) an der Lenkspindel (6) einer Lenksäule mit seinem einen Widerlager befestigbar ist und **dadurch gekennzeichnet, daß** das Lenkrad (2) im Bereich seines Bodens (18) mit dem anderen Widerlager des Torsionsmoduls (3) in den Drehrichtungen des Lenkrades (2) formschlüssig in Eingriff steht und in axialer Richtung zum einen durch den Boden (18) des Lenkrades (2) und zum anderen durch radial oder tangential zur Lenkachse betätigbare und das Torsionsmodul (3) gegenüber einem Abziehen sichernde, hintergreifende Befestigungsmittel (9, 21) verbunden ist.

2. Anordnung nach Anspruch 1, **dadurch gekennzeichnet, daß** das Torsionsmodul ein Speichenrad (3) mit einer Nabe (4) und einem über Biegespeichen (7) mit der Nabe (4) verbundenen äußeren Kranz (8) ist, dessen eines Widerlager durch die Nabe (4) und dessen anderes Widerlager durch den äußere Kranz (8) gebildet ist, wobei die Nabe (4) an der Lenkspindel (6) befestigbar ist und das Lenkrad (2) an dem äußeren Kranz (8) befestigt ist.

3. Anordnung nach Anspruch 2, **dadurch gekennzeichnet, daß** der äußere Kranz (8) des Speichenrades (3) mehrere, radial nach außen abragende und voneinander beabstandete Vorsprünge (V) nach Art einer -Zahnung aufweist, in die eine entsprechend komplementär ausgebildete Zahnung des Bodens (18) des Lenkrades (2) eingreift.

4. Anordnung nach Anspruch 3, **dadurch gekennzeichnet, daß** die Zahnungen unter Ausbildung einer Unverwechselbarkeitsmarkierung konzipiert sind.

5. Anordnung nach Anspruch 4, **dadurch gekennzeichnet, daß** die Unverwechselbarkeitsmarkierung durch einen gegenüber dem Abstand anderer Vorsprünge voneinander größeren Abstand zwischen zwei benachbarten Vorsprüngen gebildet ist.

6. Anordnung nach einem der Ansprüche 1 bis 5, **dadurch gekennzeichnet, daß** die Befestigungsmittel (9, 21) Teil des Lenkrades (2) sind und als in Montagerichtung des Lenkrades (2) zum Torsionsmodul (3) das Torsionsmodul (3) hintergreifende Klammern (10, 11; K) konzipiert sind.

7. Anordnung nach Anspruch 6, **dadurch gekennzeichnet, daß** zwei diametral zur Lenkachse angeordnete und am Lenkrad (2) schwenkbar gelagerte Klammern (10, 11) vorgesehen sind, die über einen doppelseitig wirkenden Spindelantrieb (16) mit einer radial oder tangential zur Lenkachse verlaufenden Drehachse in ihre das Torsionsmodul (3) hintergreifende Stellung einschwenkbar sind.

8. Anordnung nach Anspruch 6 bezüglich seiner Rückbeziehungen auf einen der Ansprüche 3 bis 5, **dadurch gekennzeichnet, daß** die Klammern (K) Teil eines durch einen exzentrisch zur Lenkachse angeordneten Schraubenantrieb (23) drehbar am Lenkrad (2) gelagerten Stellringes (22) sind und dergestalt konzipiert sind, daß diese beim Aufsetzen des Lenkrades (2) auf das Torsionsmodul (3) zwischen den Vorsprüngen (V) des Torsionsmoduls (3) hindurchführbar und nach Ausüben einer Drehbewegung des Stellringes (22) jeweils einen Vorsprung (V) hintergreifend angeordnet sind.

9. Anordnung nach Anspruch 7 oder 8, **dadurch gekennzeichnet, daß** die Klammern (10, 11; K) so ausgebildet oder gelagert sind, daß beim Befestigung derselben zum Hintergreifen des Torsionsmoduls (3) durch diese eine axiale, zum Torsionsmodul (3) hin gerichtete Bewegungskomponente auf das Lenkrad (2) ausgeübt wird.

## Claims

1. Arrangement consisting of a steering wheel (2) and a torsion module (3) of a torque measuring facility of a steering power support system or of a steering system, in which the torsion module (3) can be fixed with its one abutment to the steering spindle (6) of a steering column independent of the steering wheel (2) and **characterised by the fact** that the steering wheel (2) is engaged in its base section (18) in an interlocking manner with the other abutment of the torsion module (3) in the directions of rotation of the steering wheel (2) and is connected on the one hand in the axial direction by means of the base (18) of the steering wheel (2), and on the other hand by fixing means (9, 21) that can be operated radially or at a tangent to the steering type axle and that grip behind the torsion module (3), securing it against being pulled off.

2. Arrangement in accordance with Claim 1, **characterised by the fact** that the torsion module is a spoked wheel (3) with a hub (4) and an outer rim (8) connected to the hub by way of flectional spokes (7), whose one abutment is formed by the hub (4) and its other abutment formed by the outer rim (8), on which the hub (4) can be fixed to the steering spindle (6) and the steering wheel (2) is fixed to the outer rim (8).

3. Arrangement in accordance with Claim 2, **characterised by the fact** that the outer rim (8) of the spoked wheel (3) features several projections (V) that extend radially outwards and are spaced at a distance to each other in the manner of a toothing, into which a correspondingly designed complementary toothing on the base (18) of the steering wheel (2) engages.

4. Arrangement in accordance with Claim 3, **characterised by the fact** that the toothings are created by forming a non-interchangeability marking.

5. Arrangement in accordance with Claim 4, **characterised by the fact** that the non-interchangeability marking is formed by there being a greater distance between two adjacent projections in comparison to the spacing of other projections.

6. Arrangement in accordance with any of Claims 1 to 5, **characterised by the fact** that the fixing means (9, 21) are part of the steering wheel (2) and are designed as clips (10, 11; K) gripping behind the torsion module (3) in the direction of assembling the steering wheel (2) onto the torsion module (3).

7. Arrangement in accordance with Claim 6, **characterised by the fact** that two clips (10, 11) are provided that are arranged diametrically to the steering type axle and supported on the steering wheel (2) in a pivoting manner, that can be rotated into their position gripping behind the torsion module (3) by means of a double-ended spindle drive (16) having an axis of rotation running radially or at a tangent to the steering type axle.

8. Arrangement in accordance with Claim 6 as regards its relation back to any of Claims 3 to 5, **characterised by the fact** that the clips (K) are part of a positioning ring (22) supported in a rotational manner on the steering wheel (2) by means of a screw drive (23) arranged eccentrically to the steering type axle and are designed in such a manner that they are arranged so that they can be guided through the projections (V) of the torsion module (3) when the steering wheel (2) is placed upon the torsion module (3), and after carrying out a rotational movement of the positioning ring (22) each grips behind one projection, respectively.

9. Arrangement in accordance with Claim 7 or Claim 8, **characterised by the fact** that the clips (10, 11; K) are designed or supported in such a way that an axial movement component towards the torsion module (3) is exerted on the steering wheel (2) upon fixing the clips to grip behind the torsion module (3).

## Revendications

1. Ensemble composé d'un volant de direction (2) et d'un module de torsion (3) d'un dispositif de captage du couple de rotation d'un système de direction assistée ou d'un système de direction, le module de torsion (3) pouvant être fixé, avec sa contre-butée, à l'arbre de direction (6) d'une colonne de direction, indépendamment du volant de direction (2) et **caractérisé en ce que** le volant de direction (2), dans la section de sa base (18) est en prise avec l'autre contre-butée du module de torsion (3), dans les sens de rotation du volant de direction (2), et est relié, d'une part, dans le sens axial, par la base (18) du volant de direction (2) et, d'autre part, relié par des moyens de fixation (9, 21) qui peuvent être actionnés dans le sens radial ou dans le sens tangentiel par rapport à l'axe de direction et agrippent, de l'arrière, le module de torsion (3) en le protégeant contre un retrait.

2. Arrangement selon la revendication 1, **caractérisé en ce que** le module de torsion est une roue à rayons (3), avec un moyeu (4) et une couronne extérieure (8) reliée au moyeu (4) par l'intermédiaire de rayons flexibles (7), dont l'une des contre-butée est formée par le moyeu (4) et dont l'autre contre-butée est formée par la couronne extérieure (8), le moyeu (4) pouvant être fixé à l'arbre de direction (6), et le volant de direction (2) pouvant être fixé à la couronne extérieure (8).

3. Arrangement selon la revendication 2, **caractérisé en ce que** la couronne extérieure (8) de la roue à rayons (3) présente plusieurs saillies (V) orientées vers l'extérieur, dans le sens radial et distancées les unes des autres, à la manière d'une denture, dans laquelle s'engage une denture complémentaire, adéquatement conçue, de la base (18) du volant de direction (2).

4. Arrangement selon la revendication 3, **caractérisé en ce que** les dentures sont crées en formant un marquage non interchangeable.

5. Arrangement selon la revendication 4, **caractérisé en ce que** le marquage non interchangeable est formé par un intervalle entre deux saillies adjacentes qui est plus grand que les intervalles qui sont prévus entre les autres saillies.

6. Arrangement selon l'une des revendications 1 à 5, **caractérisé en ce que** les moyens de fixation (9, 21) font partie du volant de direction (2) et sont conçus sous la forme d'agrafes (10, 11 ; K) qui agrippent, par derrière, le module de torsion (3), dans la direction de montage du volant de direction (2) sur le module de torsion (3).

7. Arrangement selon la revendication 6, **caractérisé en ce que** deux agrafes (10, 11), disposées diamétralement par rapport à l'axe de direction et montés en pivotement sur le volant de direction (2) sont prévues, lesquelles peuvent pivoter en position dans laquelle elles agrippent, par l'arrière, le module de torsion (3), par l'intermédiaire d'une commande à broche (16), agissant des deux côtés, avec un axe de pivotement orienté dans le sens radial ou tangentiel par rapport à l'axe de direction.

8. Arrangement selon la revendication 6 en relation avec l'une des revendications 3 à 5, **caractérisé en ce que** les agrafes (K) font partie d'une bague de positionnement (22), montée, mobile, sur le volant de direction (2) par l'intermédiaire d'une commande à vis (23) excentrique par rapport à l'axe de direction, et sont conçues de manière à ce qu'elles puissent être conduite entre les saillies (V) du module de torsion (3), lorsque le volant de direction (2) repose sur le module de torsion (3), et, après accomplissement d'un mouvement de rotation de la bague de positionnement (22), agrippent chacune une saillie (V).

9. Arrangement selon la revendication 7 ou 8, **caractérisé en ce que** les agrafes (10, 11; K) sont conçues ou montées de telle manière que, lors de leur fixation, un composant de mouvement axial, orienté vers le module de torsion (3), est exercé par celles-ci sur le volant de direction (2), pour agripper le module de torsion (3).
